# DEMANDE DE BREVET EUROPEEN

(11) **EP 1 494 408 A2**
(43) Date de publication de la demande: **05.01.2005**
(21) Numéro de dépôt: 04291345.9
(22) Date de dépôt: 28.05.2004
(51) Int. Cl.: H04L 12/56

(54) **Système et procédé de communication entre des modules**

(30) Priorité: 04.07.2003 FR 0308225
(71) Demandeur: Arteris, 75008 Paris (FR)
(72) Inventeur: Douady, César, 91400 Orsay (FR); Boucard, Philippe, 78150 Le Chesnay (FR)
(74) Mandataire: Casalonga, Axel

(57) **Abrégé**

Système de communication entre des modules, comprenant un élément initiateur 11, au moins un élément intermédiaire 12 et un élément esclave 14, l'élément initiateur 11 étant équipé de moyens pour élaborer et envoyer une première requête 15 à un l'élément intermédiaire 12, ladite première requête 15 comprenant l'adresse de l'élément initiateur, l'adresse de l'élément intermédiaire, des données, et au moins une instruction devant être traitée par l'élément intermédiaire 12, l'élément intermédiaire 12 étant équipé de moyens pour recevoir une requête en provenance de l'élément initiateur 11, pour élaborer une deuxième requête 16 en réponse à la première requête 15, et pour envoyer la deuxième requête 16 à un élément esclave 14, ladite deuxième requête 16 comprenant l'adresse de l'élément esclave, au moins une instruction devant être traitée par l'élément esclave, des données, et l'adresse de l'élément initiateur, l'élément esclave 14 étant équipé de moyens pour recevoir une requête 16 en provenance de l'élément intermédiaire 12, et pour exécuter au moins une instruction contenue dans la deuxième requête 16.

## Description

La présente invention concerne le domaine de la communication entre des modules.

Dans le domaine de l'informatique, les systèmes classiques sont centrés autour d'un bus spécialisé qui interconnecte plusieurs agents entre eux. On entend ici par « agent », un élément susceptible de recevoir ou d'émettre des données sur un bus, par exemple une unité centrale, une mémoire, un dispositif d'entrée/sortie, etc.

Suivant un protocole spécifique et propre au bus, un seul agent peut émettre simultanément un message sur le bus. L'exécution d'un traitement impose d'avoir des opérandes présentes dans l'agent qui va exécuter le traitement et par conséquent réclame le transfert de données entre agents par l'intermédiaire du système de communication. On entend ici par « opérande » un élément sur lequel porte une opération.

Par exemple, un système comprenant un coprocesseur arithmétique et une mémoire de type SDRAM qui contient des données doit, pour qu'une opération puisse être exécutée, transférer les opérandes stockées dans la mémoire par l'intermédiaire du contrôleur de la mémoire, puis par l'intermédiaire du bus vers le coprocesseur. Les résultats de l'opération seront transférés sur le même bus.

Il en résulte une limitation du nombre des échanges due à l'utilisation d'un bus qui forme une ressource de communication unique et bornée, la bande passante du système de communication formé par le bus étant finie.

Dans des applications où une performance élevée est nécessaire, l'exécution d'un programme nécessite une organisation spécifique des instructions pour optimiser et séquencer au mieux les différents échanges entre les agents qui sont connectés au bus de communication, afin d'optimiser l'utilisation de la bande passante. Les compilateurs peuvent prendre en charge ce type de problème, mais d'un façon non optimale et moyennant qu'une partie des ressources du système soit utilisée pour la gestion de ces échanges. Le système perd alors en efficacité et les performances se dégradent d'autant plus vite qu'un nombre élevé d'agents se trouve présent sur le bus de communication.

Pour remédier à ces inconvénients, il est souhaitable que plusieurs requêtes puissent être émises simultanément entre les différents agents présents et que tous les agents travaillent en parallèle et de façon séquentielle sans qu'il soit nécessaire d'avoir un séquenceur général pour ordonnancer le flux général de données.

L'invention vise à remédier aux inconvénients du système classique évoqué ci-dessus.

L'invention propose un système et un procédé de communication particulièrement performants, permettant des communications extrêmement rapides entre différents agents tout en utilisant de façon judicieuse les capacités du système de communication.

Le système de communication entre des modules, selon un aspect de l'invention, comprend un élément initiateur, au moins un élément intermédiaire et un élément esclave. L'élément initiateur est équipé de moyens pour élaborer une première requête et de moyens pour envoyer la première requête à l'élément intermédiaire.

La première requête comprend l'adresse de l'élément initiateur, l'adresse de l'élément intermédiaire, des données et au moins une instruction devant être traitée par l'élément intermédiaire. L'élément intermédiaire est équipé de moyens pour recevoir une requête en provenance de l'élément initiateur, de moyens pour élaborer une deuxième requête en réponse à la première requête et de moyens pour envoyer la deuxième requête à un élément esclave.

La deuxième requête comprend l'adresse de l'élément esclave, au moins une instruction devant être traitée par l'élément esclave, des données, et l'adresse de l'élément initiateur. L'élément esclave est équipé de moyens pour recevoir une requête en provenance de l'élément intermédiaire, et de moyens pour exécuter au moins une instruction contenue dans la deuxième requête.

On autorise ainsi des opérations complexes qui ne nécessitent qu'un faible nombre de requêtes ou messages. On peut en général se passer de messages émis par l'élément intermédiaire vers l'élément initiateur ou encore de messages émis par l'élément esclave vers l'élément intermédiaire.

Dans un mode de réalisation de l'invention, l'élément esclave comprend des moyens pour envoyer un accusé de réception à l'élément initiateur en réponse à la deuxième requête. L'accusé de réception sera envoyé sans passer par l'élément intermédiaire. On réduit ainsi le nombre de messages devant passer par le système de communication.

Dans un mode de réalisation de l'invention, l'élément esclave comprend des moyens pour envoyer des données à l'élément initiateur.

Dans un mode de réalisation de l'invention, le système comprend une pluralité d'éléments intermédiaires, un élément intermédiaire de rang n comprenant des moyens pour envoyer à un élément intermédiaire de rang n+1 une requête de rang n+1 en réponse à une requête de rang n. La requête de rang n+1 comprend l'adresse de l'élément intermédiaire de rang n+1, au moins une instruction devant être traitée par l'élément intermédiaire de rang n+1, et l'adresse de l'élément initiateur.

Une requête peut donc passer dans un nombre important d'éléments intermédiaires, chacun y effectuant le traitement pour lequel il est prévu et envoyant à l'élément suivant une nouvelle requête.

Les différentes requêtes peuvent comprendre un champ d'adresse de l'élément émetteur de ladite requête, ce champ étant préférablement renseigné avec l'adresse de l'élément initiateur. Ainsi, un élément intermédiaire voit la requête comme étant directement émise par l'élément initiateur et non pas par l'élément intermédiaire, de rang immédiatement précédent.

Dans un mode de réalisation de l'invention, l'élément intermédiaire comprend des moyens pour élaborer une troisième requête, la troisième requête comprenant l'adresse de l'élément initiateur, l'adresse d'un élément intermédiaire, des données, et au moins une instruction devant être traitée par l'élément intermédiaire, et des moyens pour envoyer la troisième requête audit élément intermédiaire.

Dans un mode de réalisation de l'invention, ledit élément intermédiaire comprend des moyens pour élaborer une quatrième requête, la quatrième requête comprenant l'adresse d'un élément esclave, des données, et au moins une instruction devant être traitée par l'élément esclave, et des moyens pour envoyer la quatrième requête audit élément esclave.

L'élément esclave peut comprendre des moyens pour recevoir la quatrième requête en provenance de l'élément intermédiaire, et des moyens pour exécuter au moins une instruction contenue dans la quatrième requête. Un tel système est particulièrement bien adapté pour le cas où les éléments esclaves sont des mémoires, et les éléments intermédiaires sont des contrôleurs de mémoires.

Avantageusement, les modules font partie d'un circuit intégré. Il est particulièrement avantageux qu'un seul circuit intégré comprenne tout le système, y compris les modules.

Toutefois, on peut prévoir que les modules font partie d'une pluralité de circuits intégrés disposés dans un support commun, et/ou présent sur des supports amovibles connectés entre eux. Lesdits supports amovibles peuvent être reliés par une nappe de fils, un fil coaxial, des paires différentielles, des diodes laser, etc. Un support peut être formé par une carte de circuit imprimé pourvue d'éléments soudés ou fixés de façon amovible.

Dans un mode de réalisation de l'invention, une requête subséquente, telle que la deuxième requête, comprend l'adresse de l'élément initiateur en tant qu'adresse de l'émetteur de la deuxième requête.

L'invention propose également un procédé de communication entre les modules dans un système d'interconnexion comprenant au moins trois éléments, dans lequel :
- un élément initiateur envoie une première requête à un élément intermédiaire, ladite première requête comprenant l'adresse de l'élément initiateur, l'adresse de l'élément intermédiaire, des données, et au moins une instruction devant être traitée par l'élément intermédiaire,
- en réponse à la première requête, l'élément intermédiaire envoie à l'élément esclave une deuxième requête comprenant l'adresse de l'élément initiateur, l'adresse de l'élément esclave, des données, et au moins une instruction devant être traitée par l'élément esclave, et
- en réponse à la deuxième requête, l'élément esclave exécute l'instruction contenue dans la deuxième requête.

On parvient ainsi à optimiser l'utilisation des ressources d'un système de communication en limitant le nombre de requêtes ou de messages émis.

Dans un mode de réalisation de l'invention, en réponse à la deuxième requête, l'élément esclave envoie, en outre, un accusé de réception à l'élément initiateur. L'élément esclave peut envoyer des données à l'élément initiateur ou encore ne pas émettre de réponse. On entend par élément esclave, un élément situé à la fin d'une chaîne d'agents concernés par une transaction, susceptible d'exécuter une instruction, et de rendre compte à l'élément initiateur de la transaction. En d'autres termes, la réponse envoyée par un élément esclave à l'élément initiateur est dépourvue d'instruction. Ainsi, la transaction peut comprendre une pluralité de requêtes comprenant chacune au moins une instruction et, le cas échéant, une réponse consistant en un identifiant de transaction, l'adresse de l'élément initiateur, un accusé de réception et/ou des données.

Dans un mode de réalisation de l'invention, en réponse à la première requête, l'élément intermédiaire envoie à un autre élément intermédiaire une requête comprenant l'adresse de l'élément initiateur, l'adresse dudit autre élément intermédiaire, des données, et au moins une instruction devant être traitée par ledit autre élément intermédiaire.

Dans un mode de réalisation de l'invention, en réponse à une requête de rang n, un élément intermédiaire de rang n envoie à un élément intermédiaire de rang n+1, une requête de rang n+1 comprenant l'adresse de l'élément initiateur, l'adresse de l'élément intermédiaire de rang n+1, des données et au moins une instruction devant être traitée par l'élément intermédiaire de rang n+1.

Avantageusement, les éléments, initiateurs, intermédiaires et esclave, du système d'interconnexion, communiquent selon un même protocole.

Dans un mode de réalisation de l'invention, la première requête comprend l'adresse de l'élément esclave, et le nombre de données à transférer. En d'autres termes, l'élément initiateur élabore une requête de copie comprenant l'adresse de l'élément initiateur, l'adresse de l'élément intermédiaire, une instruction devant être traitée par l'élément intermédiaire, l'adresse de l'élément esclave et le nombre de données utilisées, et envoie la requête à l'élément intermédiaire. L'élément intermédiaire élabore une requête de stockage comprenant l'adresse de l'élément initiateur, l'adresse de l'élément esclave, une instruction devant être traitée par l'élément esclave, des données résultant de l'exécution de l'instruction traitée par l'élément intermédiaire et envoie la requête de stockage à l'élément esclave. L'élément esclave exécute l'instruction en stockant les données.

L'instruction à traiter par l'élément esclave est une instruction de chargement desdites données. Les données contenues dans la requête de copie comprennent l'adresse de l'élément intermédiaire, et l'adresse de l'élément esclave. Une instruction de copie d'un élément vers un autre peut donc être exécutée avec un faible nombre de requêtes émises, d'où une augmentation de la disponibilité des ressources du système de communication.

Dans un mode de réalisation de l'invention, une requête comprend l'adresse de l'élément initiateur, l'adresse de l'élément destinataire de la requête, une instruction opérationnelle, l'adresse de données dans un référentiel de l'élément destinataire de la requête, et un identifiant de la requête. L'instruction opérationnelle peut être choisie parmi une instruction de chargement, de stockage ou de copie. Une requête peut comprendre le nombre d'octets de données dans ladite requête. Une requête peut comprendre un élément permettant de faire le lien entre une requête et une réponse. Un élément initiateur peut envoyer une requête avant d'avoir reçu une réponse à une requête envoyée antérieurement. Ceci est particulièrement avantageux, car l'élément initiateur n'est pas ralenti par l'attente d'une réponse à une requête pour l'envoi d'une requête ultérieure. On parvient ainsi à augmenter la vitesse de traitement des données par l'élément initiateur.

L'invention permet donc non seulement une économie sur les ressources de communication d'un système de communication, mais aussi un accroissement de la vitesse de traitement des données par les différents agents.

L'invention sera mieux comprise à la lecture de la description détaillée de quelques modes de réalisation pris à titre d'exemples nullement limitatifs et illustrés par les dessins annexés, sur lesquels :
- la figure 1 est un schéma synoptique d'un dispositif de gestion de communication de messages d'une puce de circuit intégré;
- la figure 2 est un schéma synoptique d'une variante d'un dispositif de gestion de communication d'une puce de circuit intégré;
- la figure 3 est un schéma fonctionnel d'un module de gestion de communication asynchrone de messages; et
- les figures 4 à 7 sont des schémas fonctionnels d'un système de communication selon un aspect de l'invention.

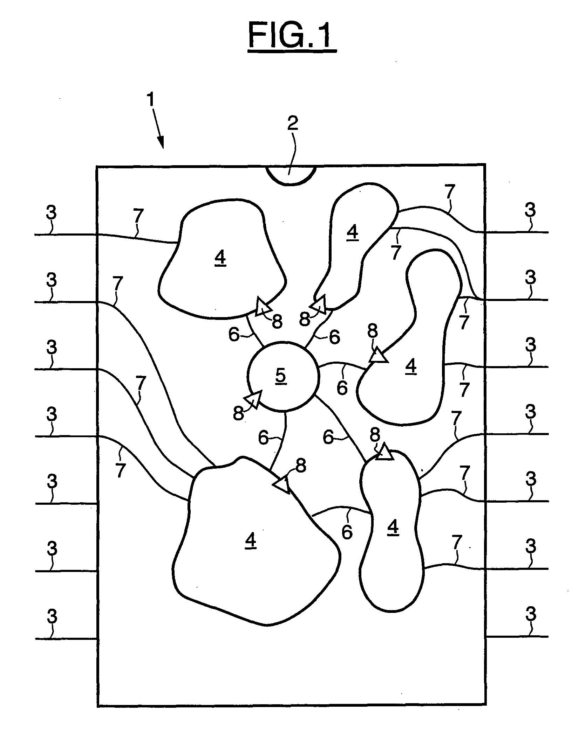

Sur la figure 1, on a représenté une puce 1 de circuits intégrés avec un indicateur d'orientation 2, et des pattes 3 pour la communication avec l'extérieur de ladite puce 1. Les composants de la puce 1, de plus en plus nombreux, sont regroupés en modules multi-synchrones 4. On entend par module multi-synchrone un sous-ensemble de circuit cadencé par une ou plusieurs horloges dédiées audit module.

Un module de gestion de communication asynchrone 5 de messages, relié à au moins deux modules multi-synchrones 4, ici tous les modules multi-synchrones 4, par des liaisons point-à-point 6, gère la communication entre les différents modules 4 de la puce 1 de circuits intégrés. Les modules 4 communiquent avec l'extérieur de la puce 1 par des liaisons 7 entre les modules et des pattes 3 de la puce 1. Deux modules multi-synchrones 4 peuvent également, si les contraintes de conception l'obligent, communiquer directement par une liaison point-à-point 6 identique aux liaisons point-à-point 6 entre le module de gestion de communication asynchrone 5 et chaque module multi-synchrone 4. Il est toutefois préférable que les communications entre deux modules synchrones 4 passent par le module de gestion de communication asynchrone 5.

Un ensemble 8 d'au moins une horloge, dédiée à un unique module multi-synchrone, détermine les références de cadencement des fréquences de fonctionnement dudit module multi-synchrone 4. Il est à noter que le module 5 est un cas particulier de module multi-synchrone, et qu'il possède également son propre ensemble 8 d'au moins une horloge.

Un unique protocole de communication prédéterminé spécifique est utilisé pour les communications entre lesdits modules de la puce 1 s'effectuant sur les liaisons 6.

Chaque liaison point-à-point 6 comprend, pour chaque extrémité, des moyens d'émission et des moyens de réception de messages, chaque moyen de réception comprenant une mémoire de type premier entré premier sorti, communément appelée "pile FIFO".

Sur une liaison 6, les données d'horloges et les autres données sont envoyées simultanément. Au cours du transport, les données d'horloge subissent un déphasage, et les données d'horloge d'arrivée n'ont pas la même phase que les données d'horloge de départ. Les autres données subissent alors une dispersion temporelle. Si la dispersion temporelle est trop importante, une re-synchronisation est effectuée.

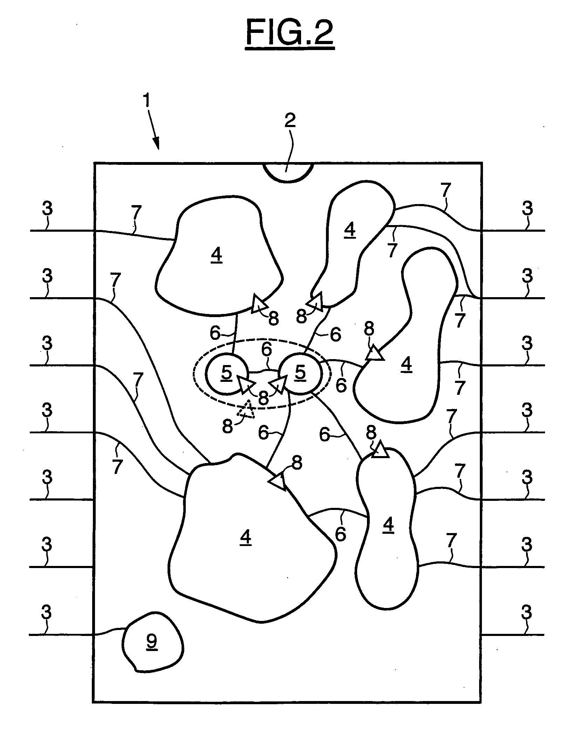

La figure 2 présente une variante du dispositif de la figure 1. Le dispositif comprend au moins deux modules de gestion de communication asynchrones 5, ici deux sont représentés. Il peut être nécessaire, en regard de la complexité d'un circuit et de sa partition en un nombre important de modules multi-synchrones, de disposer de plusieurs modules de gestion de communication asynchrone 5. De plus, le circuit peut comprendre un ou plusieurs modules 9, dont un seul est représenté ici, non reliés aux modules de gestion de communication asynchrone 5. Ce dispositif peut être vu de l'extérieur comme un unique module de gestion de communication asynchrone permettant de retrouver un dispositif semblable à celui de la figure 1.

Cependant il existe une différence, car le fait de mettre plusieurs modules de gestion de communication asynchrone nécessite des étapes supplémentaires pour la communication entre deux modules synchrones, notamment une liaison 6 supplémentaire pour le transfert des échanges de données, et plusieurs traitements successifs correspondant au nombre de modules de gestion de communication asynchrone.

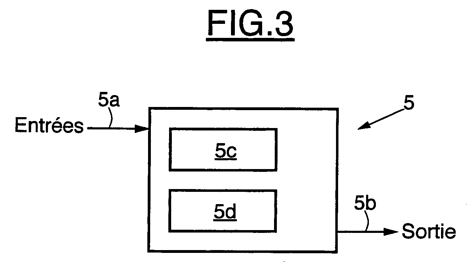

La figure 3 est un schéma fonctionnel d'un module de gestion de communication asynchrone 5. Celui-ci comprend des entrées 5a de réception de messages de données provenant d'autres modules et des sorties 5b de transmission de messages de données vers d'autres modules. Les messages en entrée sont stockés temporairement, par exemple dans une mémoire de type premier entré premier sorti, communément appelée "pile FIFO" des moyens de réception de messages d'une liaison point-à-point 6. Ce stockage temporaire permet de pouvoir gérer les messages en entrée, même si ceux-ci arrivent à une cadence supérieure à la capacité de traitement des messages du module 5. Le module de gestion de communication asynchrone 5 comprend en outre des moyens 5c pour aiguiller des messages de sortie vers leur module destinataire, ainsi que des moyens 5d pour gérer l'aiguillage des messages de sortie. Un message en entrée est donc stocké dans la pile FIFO des moyens de réception de messages d'une liaison point-à-point 6, puis pris en compte par le module 5, qui va gérer son aiguillage vers son module synchrone 4 de destination par les moyens 5c et 5d. Ce message quitte alors le module 5 par la sortie 5b et transite par les moyens d'émission de messages d'une liaison point-à-point 6 au module synchrone 4 de destination du message.

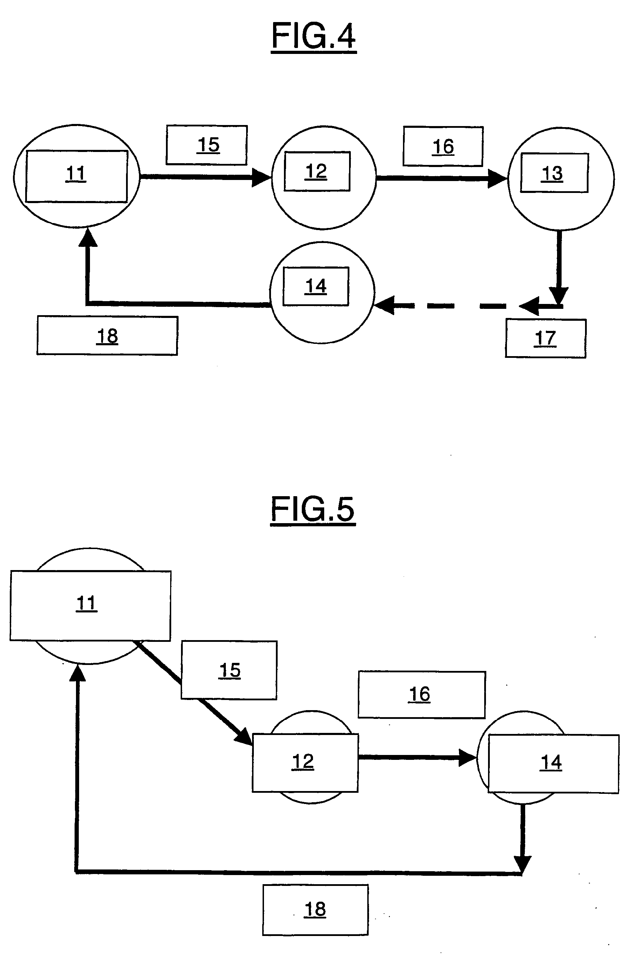

Comme illustré sur la figure 4, le système de communication comprend un élément 11, dit « élément initiateur », apte à générer une transaction se traduisant par une pluralité de requêtes, un élément intermédiaire 12, apte à traiter une requête et à envoyer une requête, un élément intermédiaire 13, apte à recevoir une requête et à émettre une requête, et un élément esclave 14, apte à envoyer à l'élément initiateur 11 des données et/ou un accusé de réception. L'élément initiateur initie la transaction en élaborant une requête comprenant l'adresse dudit élément initiateur, l'adresse de l'élément intermédiaire 12, une instruction opérationnelle devant être exécutée par l'élément intermédiaire 12 et, en général, des données. L'élément initiateur 11 comprend également des moyens d'émission de ladite requête à destination de l'élément intermédiaire 12.

L'élément intermédiaire 12 reçoit la requête 15 envoyée par l'élément initiateur 11 et effectue un traitement sur les données reçues en fonction de l'instruction opérationnelle contenue dans la requête 15 reçue. L'élément intermédiaire 12 comprend un moyen pour élaborer une deuxième requête 16 destinée à l'élément intermédiaire 13 de la part de l'élément initiateur 11, et un moyen pour envoyer ladite requête 16. La requête 16 envoyée par l'élément intermédiaire 12 à l'élément intermédiaire 13 comprend l'adresse de l'élément intermédiaire 13, l'adresse de l'élément initiateur 11 en tant qu'adresse de l'émetteur de ladite requête, une instruction opérationnelle devant être exécutée par l'agent intermédiaire 13, et des données.

L'élément intermédiaire 13, qui comprend également des moyens d'élaboration et des moyens d'envoi de requête, à réception de la requête 16 envoyée par l'élément intermédiaire 12, effectue le traitement défini par l'instruction opérationnelle conclue dans ladite requête 16 et élabore une requête 17 contenant, à l'instar de la précédente, l'adresse du destinataire de ladite requête 17, l'adresse de l'élément initiateur 11 en tant qu'adresse d'émetteur de ladite requête, des données, et une instruction opérationnelle. La requête 17 générée par l'élément intermédiaire 13 peut être envoyée directement à l'élément esclave 14 ou à un autre élément intermédiaire, non représenté, la transaction pouvant passer par un nombre non limité d'éléments intermédiaires, entre l'élément intermédiaire 13 et l'élément esclave 14.

L'élément esclave 14, à réception d'une requête 17 provenant, soit de l'élément intermédiaire 13 ou, soit du dernier élément intermédiaire de la chaîne d'éléments intermédiaires, effectue le traitement défini par l'instruction opérationnelle contenue dans la requête reçue et, en réponse à ladite requête, peut transmettre à l'élément initiateur 11 les données et/ou un accusé de réception. L'élément esclave 14 peut aussi ne rien transmettre à l'élément initiateur 11.

On comprend que toute requête reçue par un élément intermédiaire ou par l'élément esclave comprend, en tant qu'adresse d'émetteur, l'adresse de l'élément initiateur 11. Ainsi, chaque élément intermédiaire et l'élément esclave, reçoit une requête identique à celle qu'il aurait reçue si elle était envoyée directement de l'élément initiateur 11 à l'élément considéré. On parvient ainsi à éviter les modifications de protocole de fonctionnement.

À titre d'exemple, on peut prévoir différents types d'instructions opérationnelles pouvant être contenus dans les requêtes: une instruction de stockage sans accusé de réception, une instruction de stockage avec accusé de réception, une instruction d'approvisionnement et de stockage en mémoire, une instruction d'approvisionnement, une instruction de copie sans accusé de réception et une instruction de copie avec accusé de réception.

À titre d'exemple, une requête de stockage pourra comprendre un champ d'adresses d'émetteur, renseigné avec l'adresse de l'élément initiateur 11, un champ d'adresses de l'élément destinataire de la requête, un champ de taille de message, un code opérationnel définissant l'instruction opérationnelle et un champ de données. Une requête d'approvisionnement aura la même structure, à l'exception du champ de données. Une requête de copie aura la même structure, à ceci près que le champ de données est renseigné avec l'adresse de l'élément esclave de destination.

Il est particulièrement avantageux que chaque requête comprenne en outre un champ relativement court qui permette de faire le lien entre une requête et une réponse, dans la mesure où l'élément initiateur n'attend pas la réponse à une première requête pour émettre une autre requête.

La figure 5 illustre le cas d'une application de l'invention dans le domaine des télécommunications. Dans ce domaine, certains équipements jouent le rôle de désagrégateurs de données. Un désagrégateur de données reçoit en entrée une ligne de télécommunications haut débit, portant un nombre très élevé de flux, par exemple mille, qui sont multiplexés. Il envoie en sortie mille lignes indépendantes. Une telle désagrégation de données nécessite la gestion d'un contexte dépendant de chaque ligne. On entend ici par contexte, la définition des exigences de chaque ligne. Des mémoires de type premier entré premier sorti sont généralement utilisées pour mémoriser les paquets entrants associés à une ligne. Puis, périodiquement, ces mémoires, premier entré premier sorti sont vidées vers des interfaces de lignes. Si le nombre de mémoires est élevé, par exemple mille, la réalisation matérielle avec une mémoire par flux est particulièrement coûteuse.

L'invention propose un gestionnaire de mémoires premier entré premier sorti, permettant de réduire le nombre de mémoires avec une attribution dynamique d'une mémoire à une ligne résultant de l'exécution d'un logiciel de gestion par un module matériel.

Dans l'exemple illustré sur la figure 5, il est prévu un élément intermédiaire 12 formé par le gestionnaire de mémoires et un élément esclave 14 formé par une mémoire. L'élément initiateur 11 envoie une requête 15 à l'élément intermédiaire 12.

Dans le cas d'une transaction de copie, la requête 15 peut comprendre l'adresse de l'élément initiateur 11, l'adresse de l'élément intermédiaire 12, le nombre d'octets de données, le code opérationnel de l'instruction voulue, par exemple stockage avec accusé de réception, l'adresse dans l'élément intermédiaire 12, l'adresse de l'élément esclave 14, l'adresse dans l'élément esclave 14, et un identificateur de transaction. L'élément intermédiaire 12, gestionnaire de mémoires, transforme l'adresse de mémoire sélectionnée dans une adresse physique présente dans la mémoire formée par l'élément esclave 14.

L'élément intermédiaire 12 lance une requête 16 comprenant, comme adresse d'émetteur, l'adresse de l'élément initiateur 11, comme adresse de destinataire, la mémoire contenant les données de l'adresse sélectionnée, le nombre de données transmis, le code opérationnel de stockage avec accusé de réception, l'adresse réelle représentant la mémoire sélectionnée, les données et l'identificateur de transaction.

À réception de la requête 16 de l'élément intermédiaire 12, l'élément esclave 14, ici une mémoire, contenant les données de la ligne sélectionnée, met à jour les données de la mémoire sélectionnée puis envoie un accusé de réception à l'élément initiateur 11.

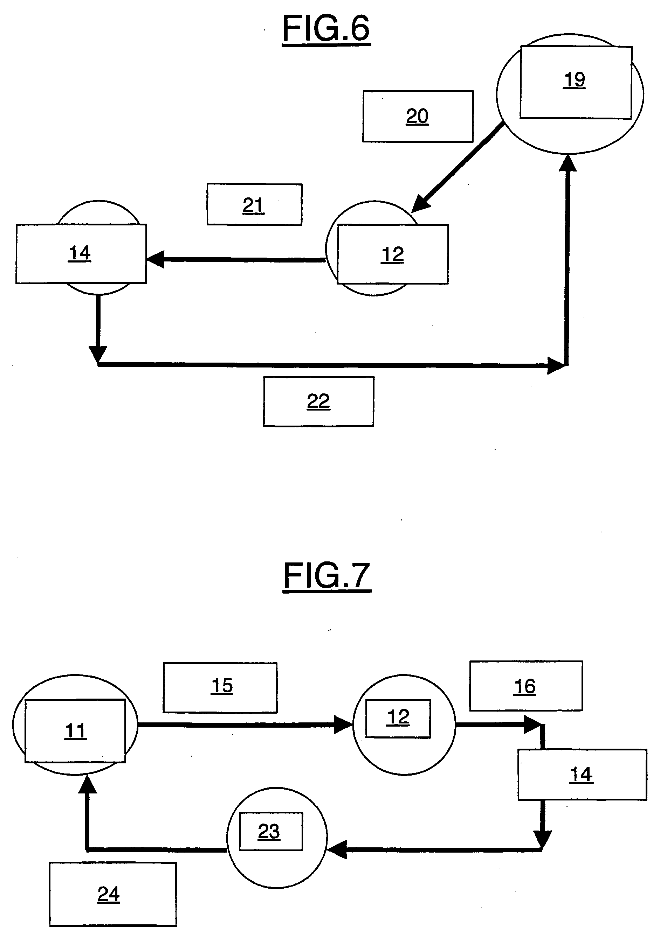

La figure 6 illustre le cas d'une instruction de dépilage des données présentes dans une mémoire et l'envoi desdites données à l'élément initiateur 19, qui est donc ici un autre élément initiateur. L'élément initiateur 19, initiateur de la transaction, lance une requête 20 de chargement de données provenant d'une mémoire correspondant virtuellement à la ligne de télécommunications traitée. La requête de l'élément initiateur 19 est adressée au gestionnaire de mémoires, alias l'élément intermédiaire 12, et comprend l'adresse de l'élément initiateur 19, l'adresse de l'élément intermédiaire 12, le nombre d'octets de données, le code opérationnel de l'instruction de stockage avec accusé réception, l'adresse virtuelle de la mémoire sélectionnée et l'identificateur de la transaction.

L'élément intermédiaire 12 effectue la transformation de l'adresse virtuelle de mémoire sélectionnée vers une adresse physique présente dans la mémoire formant l'élément esclave 14 et contenant les données de la ligne traitée par l'élément initiateur 19. L'élément intermédiaire 12 émet une requête 21 d'approvisionnement vers l'élément esclave 14. La requête comprend comme adresse d'émetteur, l'adresse de l'élément initiateur 19, l'adresse de la mémoire contenant les données voulues pour la ligne traitée, le nombre d'octets, l'instruction opérationnelle de stockage avec accusé réception, l'adresse réelle représentant la mémoire sélectionnée et l'identificateur de transaction.

À réception de ladite requête, l'élément esclave 14 qui contient les données recherchées met à jour les données de la mémoire sélectionnée puis envoie les données à l'élément initiateur 19 sous la forme d'une réponse 22 contenant l'adresse de l'élément initiateur 19, les données et l'identificateur de la transaction.

La figure 7 illustre le cas d'un élément intermédiaire 12 recevant une requête 16 en provenance d'un élément intermédiaire 12 qui a lui-même reçu une requête 15 en provenance d'un élément initiateur 11. L'élément intermédiaire 12 élabore une réponse et l'envoie à un élément esclave 23. L'élément esclave 23 élabore une réponse 24 et l'envoie à l'élément initiateur 11. Il est donc possible de faire transiter une réponse par un certain nombre d'éléments intermédiaires en fonction de l'architecture du système.

## Revendications

1. Système de communication entre des modules (5), **caractérisé par le fait qu'**il comprend un élément initiateur (11), au moins un élément intermédiaire (12) et un élément esclave (14), l'élément initiateur (11) étant équipé de moyens pour élaborer une première requête, et de moyens pour envoyer la première requête (15) à un l'élément intermédiaire (12), ladite première requête (15) comprenant l'adresse de l'élément initiateur, l'adresse de l'élément intermédiaire, des données, et au moins une instruction devant être traitée par l'élément intermédiaire, l'élément intermédiaire (12) étant équipé de moyens pour recevoir une requête en provenance de l'élément initiateur (11), de moyens pour élaborer une deuxième requête (16) en réponse à la première requête (15), et de moyens pour envoyer la deuxième requête (16) à un élément esclave (14), ladite deuxième requête (16) comprenant l'adresse de l'élément esclave, au moins une instruction devant être traitée par l'élément esclave, des données, et l'adresse de l'élément initiateur, l'élément esclave (14) étant équipé de moyens pour recevoir une requête (16) en provenance de l'élément intermédiaire (12), et de moyens pour exécuter au moins une instruction contenue dans la deuxième requête (16).

2. Système selon la revendication 1, **caractérisé par le fait que** l'élément esclave (14) comprend des moyens pour envoyer un accusé de réception à l'élément initiateur (11) en réponse à la deuxième requête.

3. Système selon la revendication 1 ou 2, **caractérisé par le fait que** l'élément esclave (14) comprend des moyens pour envoyer des données à l'élément initiateur (11).

4. Système selon l'une quelconque des revendications précédentes, **caractérisé par le fait qu'**il comprend une pluralité d'éléments intermédiaires, un n^{ième} élément intermédiaire comprenant des moyens pour envoyer à un (n+1)^{ième} élément intermédiaire une (n+1)^{ième} requête en réponse à une n^{ième} requête, la (n+1)^{ième} requête comprenant l'adresse du (n+1)^{ième} élément intermédiaire, au moins une instruction devant être traitée par le (n+1)^{ième} élément intermédiaire, et l'adresse de l'élément initiateur (11).

5. Système selon l'une quelconque des revendications précédentes, **caractérisé par le fait que** la première requête comprend en plus l'adresse de l'élément esclave, et le nombre de données à transférer.

6. Système selon l'une quelconque des revendications précédentes, **caractérisé par le fait que** l'élément intermédiaire (12) comprend une mémoire.

7. Système selon l'une quelconque des revendications précédentes, **caractérisé par le fait que** lesdits modules (5) font partie d'un circuit intégré.

8. Système selon l'une quelconque des revendications précédentes, **caractérisé par le fait que** lesdits modules (5) font partie d'une pluralité de circuits intégrés disposés dans un support commun, et/ou présent sur des supports amovibles connectés entre eux.

9. Système selon l'une quelconque des revendications précédentes, **caractérisé par le fait qu'**une requête subséquente comprend l'adresse de l'élément initiateur en tant qu'adresse de l'émetteur de ladite requête subséquente.

10. Procédé de communication entre des modules dans un système d'interconnexion comprenant au moins trois éléments, dans lequel:
- un élément initiateur envoie une première requête à un élément intermédiaire, ladite première requête comprenant l'adresse de l'élément initiateur, l'adresse de l'élément intermédiaire, des données, et au moins une instruction devant être traitée par l'élément intermédiaire,
- en réponse à la première requête, l'élément intermédiaire envoie à l'élément esclave une deuxième requête comprenant l'adresse de l'élément initiateur, l'adresse de l'élément esclave, des données, et au moins une instruction devant être traitée par l'élément esclave, et
- en réponse à la deuxième requête, l'élément esclave exécute l'instruction contenue dans la deuxième requête.

11. Procédé selon la revendication 10, dans lequel en réponse à la deuxième requête, l'élément esclave envoie, en outre, un accusé de réception à l'élément initiateur.

12. Procédé selon la revendication 10 ou 11, dans lequel en réponse à la deuxième requête, l'élément esclave envoie, en outre, des données à l'élément initiateur.

13. Procédé selon l'une quelconque des revendications 10 à 12, dans lequel en réponse à la première requête, l'élément intermédiaire envoie à un autre élément intermédiaire une requête comprenant l'adresse de l'élément initiateur, l'adresse dudit autre élément intermédiaire, des données, et au moins une instruction devant être traitée par ledit autre élément intermédiaire.

14. Procédé selon l'une quelconque des revendications 10 à 13, dans lequel en réponse à une n^{ième} requête, un n^{ième} élément intermédiaire envoie à un (n+1)^{ième} élément intermédiaire une (n+1)^{ième} requête comprenant l'adresse de l'élément initiateur, l'adresse du (n+1)^{ième} élément intermédiaire, des données, et au moins une instruction devant être traitée par le (n+1)^{ième} élément intermédiaire.

15. Procédé selon l'une quelconque des revendications 10 à 14, dans lequel les éléments, initiateur, intermédiaires et esclave, du système d'interconnexion communiquent selon un même protocole.

16. Procédé selon l'une quelconque des revendications 10 à 15, dans lequel en réponse à une requête de copie, l'élément intermédiaire interprète les données contenues dans ladite requête comme étant une adresse, et élabore une requête comprenant l'adresse de l'élément initiateur contenue dans la requête de copie, l'adresse d'un élément esclave, des données résultant de l'exécution de l'instruction traitée par l'élément intermédiaire, et au moins une instruction devant être traitée par l'élément esclave.

17. Procédé selon la revendication 16, dans lequel l'instruction devant être traitée par l'élément esclave est une instruction de stockage desdites données.

18. Procédé selon la revendication 16 ou 17, dans lequel les données contenues dans la requête de copie comprennent l'adresse de l'élément esclave.

19. Procédé selon l'une quelconque des revendications 10 à 18, dans lequel une requête comprend l'adresse de l'élément initiateur, l'adresse de l'élément destinataire de la requête, une instruction opérationnelle, l'adresse de données dans un référentiel de l'élément destinataire de la requête, et un identifiant de requête.

20. Procédé selon la revendication 19, dans lequel l'instruction opérationnelle est choisie parmi une instruction de chargement, de stockage ou de copie.

21. Procédé selon la revendication 19 ou 20, dans lequel une requête comprend le nombre d'octets de données dans ladite requête.

22. Procédé selon l'une quelconque des revendications 19 à 21, dans lequel une requête comprend un élément permettant de faire le lien entre une requête et une réponse.

23. Procédé selon l'une quelconque des revendications 19 à 22, dans lequel un élément initiateur envoie une requête avant d'avoir reçu une réponse à une requête envoyée antérieurement.
